(19)

Europäisches
Patentamt
European
Patent Office
Office européen
des brevets

(11) **EP 3 451 282 A1**

(12) **EUROPEAN PATENT APPLICATION**

(43) Date of publication:
**06.03.2019 Bulletin 2019/10**

(51) Int Cl.:
*G06T 5/00* (2006.01)       *H04N 1/407* (2006.01)

(21) Application number: **17306148.2**

(22) Date of filing: **05.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing 92130 Issy-les-Moulineaux (FR)**

(72) Inventors:
 • **REINHARD, Erik**
  **35576 CESSON-SÉVIGNÉ (FR)**
 • **CAUVIN, Laurent**
  **35576 CESSON-SÉVIGNÉ (FR)**
 • **POIRIER, Guillaume**
  **35576 CESSON-SÉVIGNÉ (FR)**

(74) Representative: **Browaeys, Jean-Philippe et al InterDigital CE Patent Holdings 20, rue Rouget de Lisle 92130 Issy-les-Moulineaux (FR)**

(54) **METHOD FOR PROCESSING A HDR IMAGE TO COMPENSATE VEILING GLARE INTRA-OCULAR EFFECT**

(57)    Method comprising :
- detecting in input image pixels that induce glare, then,
- for each pixel $q$, computing a level of glare $L_{G,q}$ that is induced by detected pixels and that overlaps said pixel $q$, computing an increase of contrast to apply to pixel $q$ based on said computed level of glare $L_{G,q}$, and applying said computed increase of contrast to said input image.

Fig.1

**Description**

Technical Field :

The invention relates to the processing of images, notably HDR images, such that perception of details in dark regions is improved.

Background Art

High Dynamic Range (HDR) images are superior to conventional images. By preserving the original scene's edge information in HDR images, observers are allowed to see details in the shadows that are lost in conventional imaging. HDR imaging is successful notably because it preserves local spatial details.

The UltraHD Alliance has defined two standards for displays to qualify as an HDR display:

- A maximum peak luminance of more than 1000 nits (with 1 nit being equal to 1 $cd/m^2$) with a black level of less than 0.05 nits. For a display meeting this specification, the black level is 0.005% of the peak luminance. This range is intended for LCD displays.
- A maximum peak luminance of more than 540 nits with a black level of less than 0.0005 nits. For a display meeting this specification, the black level is $10^{-6}$% of the peak luminance. This range is intended for OLED displays.

However, intraocular veiling glare on the retina may seriously limit the perception of details in HDR images displayed on a HDR display. See for example the article from Ritschel et al., entitled "Temporal Glare: Real-Time Dynamic Simulation of the Scattering in the Human Eye", 2009, DOI: 10.1111/j.1467-8659.2009.01357.x from RITSCHEL ET AL. (XP055017598). Although humans continue to discriminate appearances of display blacks that are 1/1000th the white luminance, the stimulus on the retina may be limited by intraocular scattering of light to, for instance, only 1/30th the white. Especially, high peak luminance values displayed by a HDR display controlled by a HDR content cause light scatter in the cornea, lens and vitreous humor, so that a high luminance sharp point light source that is actually HDR displayed as a sharp point light source by the HDR display is not perceived as a sharp point by a viewer, but instead as a slightly smoothed point.

The article entitled "Minimizing Veiling Glare in the High-Luminance-Range Visualization of Medical Images", pp. 816-819 in SID 2012 DIGEST, from CHOI et al., points out the critical reduction of contrast in the perception of medical images, due to intraocular light scatter from bright areas of these images, when these images are displayed using a HDR display. To limit this reduction of contrast, this document proposes to tone-map images until a reasonable degradation of contrast perception is reached. In summary, this document teaches to reduce the dynamic range of images to limit the reduction of contrast perception.

On the opposite, when keeping HDR content and when using HDR displays, the HDR display of this HDR content may become the most significant source of glare on a viewer's retina. The intraocular scatter is more pronounced in HDR displays that are able to display contrasts at very dark levels, while at the same time exhibiting a high peak luminance (see notably HDR OLED displays above).

Note, for instance, that a significant amount of glare (more than 1% of the strength of the glare source) is present anywhere between +4 and -4 degrees of viewing angle (i.e. 8 degrees total). As an example, common displays with a display diagonal of 46" (= 117 cm) will have a recommended viewing distance of 196 cm. Under such viewing conditions, the display itself will have a field of view of 17 degrees along the diagonal. If a glare source is placed at the center of the display, then its glare extends significantly for nearly half of the angle subtended by the display (100 * 8 / 17 = 47%) along the diagonal.

Glare causes on the retina a lower perceived contrast in regions of the retina adjacent to glare sources. If such adjacent regions are very dark, then subtle contrasts of the image available in those regions may go unnoticed.

Summary of invention :

An object of the invention is to avoid the aforementioned drawback, by proposing to selectively enhance contrast in some parts of displayed HDR images to compensate for losses of contrast perception by human eyes due to veiling glare intra-ocular effect.

For this purpose, a subject of the invention is a method for processing an input image into an output image, comprising :

- detecting in said input image pixels that induce glare,
  then, for each pixel $q$ of a group of pixels of said input image,

- computing a level of glare $L_{G,q}$ that is induced by said detected pixels and that overlaps said pixel **q**,
- computing an increase of contrast to apply to said pixel **q** based on said computed level of glare $L_{G,q}$,
- applying said computed increase of contrast to said input image,
  then resulting into said output image.

Preferably, said computing an increase of contrast to apply to said pixel **q** is performed such as to compensate for a loss of contrast perception induced in human eye by said overlapping level of glare $L_{G,q}$,

Preferably, said computing of an increase of contrast comprises the computing of a factor $k_q$ of increase of contrast to apply to said pixel **q** according to :

$$k_q = \frac{L_q + L_{G,q}}{L_q}$$

where $L_q$ is the luminance of said pixel **q** and where $L_{G,q}$ is the computed level of glare $L_{G,q}$ overlapping this pixel **q.**

Preferably, said glare results from light scattering in human eye.

Preferably, said detecting is performed by thresholding luminance values of pixels of the input image over a luminance threshold $L_T$.

In a first variant, said group of pixels encompasses all pixels of said input image.

In a second variant, said group of pixels does not include said detected pixels.

A subject of the invention is also a method for displaying an input image on a display device, comprising :

- processing said input image into an output image according to the above method,
- displaying said output image on said display device.

Preferably, said luminance threshold $L_T$ is function of the maximum peak luminance $L_{Max-Display}$ of the display device. This maximum peak luminance is preferably above 540 nits, such that the display device is a HDR display device.

Preferably, said glare results from light scattering in human eye of a viewer viewing images displayed by said display device, wherein said computing of the level of glare $L_{G,q}$ is based on a model of light scattering in human eye. Said computing takes preferably into account a viewing distance between the viewer and the display device.

A subject of the invention is also an image processing unit comprising at least one processor configured to implement the above method for image processing.

A subject of the invention is also a display device comprising :

- an image processing unit as defined above, and
- means for displaying image processed by said image processing unit.

A subject of the invention is also a computer program product comprising program code instructions to execute the above method for processing an input image, when this program is executed on a computer.

Brief description of drawings :

The invention will be more clearly understood on reading the description which follows, given by way of non-limiting examples and with reference to the appended figures in which:

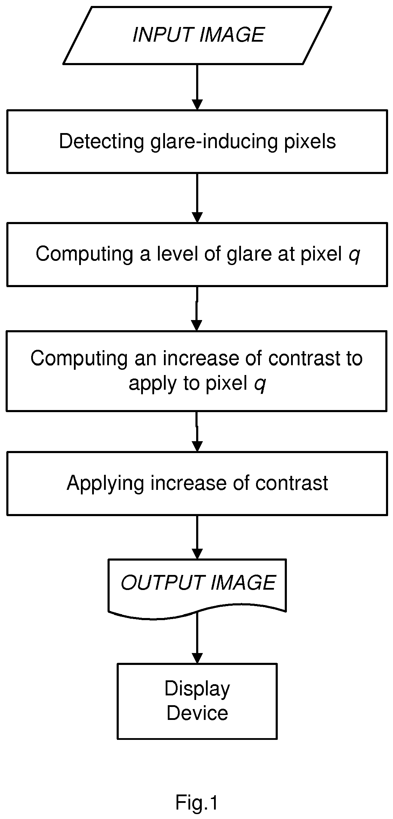

- Figure 1 is a flow chart describing a main embodiment of the method of image processing of an input image,
- Figure 2 illustrates a glare spread function that may be used to implement the method of image processing of Figure 1.

Description of embodiments :

It will be appreciated by those skilled in the art that flow charts and flow diagram, presented herein represent conceptual views of illustrative circuitry embodying the invention. They may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. Explicit use of the term "processor" should not be construed to refer exclusively to hardware capable of executing software. The various processes and functions described herein may be either part of the microinstruction code or part of the application program, or any combination thereof, which may be executed by a CPU.

It is to be understood that the invention may be implemented in various forms of hardware, software, firmware, special purpose processors, or combinations thereof. The invention may be notably implemented as a combination of hardware and software. Moreover, the software may be implemented as an application program tangibly embodied on an image processing unit. The application program may be uploaded to, and executed by, an image processing unit implemented on a computer platform having hardware such as one or more central processing units ("CPU"), a random access memory ("RAM"), and input/output ("I/O") interfaces. The computer platform may also include an operating system and microinstruction code. In addition, various other peripheral units may be connected to the computer platform such as a display device having notably HDR capabilities, and such as an additional data storage unit.

This image processing device - with this computer platform - may notably be incorporated into an electronic device such as a TV set, a tablet, a smartphone, a VR headset, and a set-top-box.

A main embodiment of the method of image processing of an input image, notably of a HDR input image, will now be described.

1$^{st}$ step : <u>detecting glare sources in the input image</u> :

Glare sources and their positions in the input image may for example be detected by thresholding luminance values (or RGB pixel values) of pixels of the image. It means that a pixel counts as a glare source if its luminance (or RGB pixel values) exceed a luminance threshold $L_T$. This luminance threshold may be fixed in function of the maximum peak luminance $L_{Max-Display}$ of a display device used to display the processed image. This maximum peak luminance is preferably above 540 nits, such that the display device is a HDR display device. Detection of glare sources in the image may be performed by any other known method, or alternatively all pixels in the image may be considered as glare sources.

Detection of glare sources in the image is performed in a manner known per se such that the output of the glare source detection step is a set $G = \{p : L_p > L_T\}$ of glare-inducing pixels, whereby each glare-inducing pixel has at least a pixel location $p = (x, y)$ and a luminance level $L_p$.

Optionally, adjacent glared-inducing pixels are grouped in a manner known per se into glare-inducing regions. For each glare-inducing region, its center may be chosen as a representative position $r = (x, y)$, and the average luminance of pixels of the glare-inducing region may be chosen as the representative luminance of this glare-inducing region. Such a grouping step will advantageously lower the computational cost of the following steps.

2$^{nd}$ step : <u>computing a level of glare $L_{G,q}$ overlapping a pixel $q$ of the input image.</u>

To determine the influence of the set of glare-inducing pixels $G$ on pixels in the image, a model of light scattering in human eye is used. In this embodiment, the model of Baxter et. al. is used (Baxter, B., Ravindra, H. and Normann, R.A., 1982. Changes in lesion detectability caused by light adaptation in retinal photoreceptors. Investigative Radiology, 17(4), pp.394-401). This model defines a point spread function of glare $g$ as function of viewing angle $\theta$ (in degrees unit) of the viewer viewing the displayed image :

$$g(\theta) = \begin{cases} 1.13e^{-5.52\theta^2} + \frac{1.42}{9.85+\theta^{3.3}}, & |\theta| \leq 7' \\ 9.35 \times 10^{-6}(7.8 + \theta)^{-2.5}, & |\theta| \geq 7' \end{cases} \quad \text{eq. (1)}$$

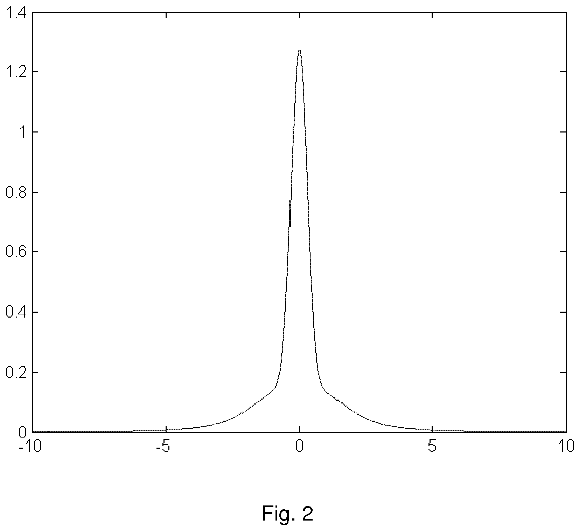

Such a glare spread function is illustrated on Figure 2.

Any other known model of light scattering in the human eye can be used instead.

The conversion of viewing angles into pixel distances in the input image can be performed under certain assumptions regarding pixel resolution, display size and viewing distance (ITU-R Rec. BT.2022, 'General viewing conditions for subjective assessment of quality of SDTV and HDTV television pictures on flat panel displays'). For instance, the viewing distance for HD resolution images would be 3.2 times the height of the display (i.e., 3.2 H). If these assumptions are approximately met, then the distance between two neighboring pixels in the input image is less than 1 arc-min (1/60$^{th}$ of a degree) at the viewer's eye.

The conversion of viewing angles into pixel distances is then performed as follows. If two pixels of the image $p$ and $q$ are separated in the image by a distance of $d_{p,q}$ pixels, then the viewing angle $\theta$ separating these two pixels for the viewer would be approximately as follows :

$$\theta = d_{p,q}/60 \text{ degrees} \qquad \text{eq.(2)}$$

When the set $G$ of glare-inducing pixels contains only one glare-inducing pixel, on the viewer's retina, the level of glare $L_{G,q}$ overlapping a pixel $q$ that has a distance of $d_{p,q}$ pixels to another pixel $p$ that is identified as a glare source in the image will be determined by the equation :

$$L_{G,q} = g\left(\frac{d_{p,q}}{60}\right) * L_p \ / \ g(0) \qquad \text{eq.(3)}$$

where $L_p$ is the luminance of the glare-inducing pixel $p$.

Note that the division by $g(0)$ is required because the point spread function $g$ is not normalized, as shown in Figure 2.

The computing of the level of glare $L_{G,q}$ then takes into account the viewing distance between the viewer and the display device which is used to display the processed image.

When the set $G$ of glare-inducing pixels contains more than one pixel, on the viewer's retina, the level of glare $L_{G,q}$ overlapping a pixel $q$ will be computed as follows

$$L_{G,q} = \sum_{p \in G} g\left(\frac{d_{p,q}}{60}\right) * L_p \ / \ g(0) \qquad \text{eq.(3')}$$

3$^{rd}$ step : computing an increase of contrast of pixel $q$ to compensate for the loss of contrast perception due to glare overlapping this pixel $q$ on the viewer's retina.

So-called Weber's law is known to describe a lower limit of contrast perception according to a uniform light field on which a detail of an image is superimposed. This lower limit is generally named "just noticeable luminance difference" $\Delta L$. The "just noticeable luminance difference" $\Delta L$ of a detail superimposed upon a uniform light field, depends on the luminance L of this uniform field as follows:

$$\frac{\Delta L}{L} = k$$

The interpretation of Weber's law is that at low luminance values of a light field, a small contrast may be detectable, whereas at high luminance levels of a light field, only larger luminance differences can be detected.

Now, considering that a pixel $q$ of the image has a contrast $\Delta L_q$ with its neighboring pixels in the absence of glare, an increase of contrast of this pixel by a factor $k_q$ is performed so that after contrast enhancement this pixel $q$ will have a contrast of $k_q \Delta L_q$ with its neighboring pixels that will compensate for the loss of contrast perception due to the intra-ocular veiling glare effect taking place in the viewer's eyes. According to Weber's law, we will then have the following equation :

$$\frac{\Delta L_q}{L_q} = \frac{k_q \Delta L_q}{L_q + L_{G,q}} \qquad \text{eq. (4)}$$

The factor $k_q$ of increase of contrast of pixel $q$ of the input image is then computed as follows:

$$k_q = \frac{L_q + L_{G,q}}{L_q} \qquad \text{eq. (4')}$$

Or, when combining with equation (2') above, we get:

$$k_q = \frac{L_q + \sum_{p \in G} g\left(\frac{d_{p,q}}{60}\right) * L_p \ / \ g(0)}{L_q} \qquad \text{eq. (4'')}$$

From this equation 4", it can be seen that if there is no glare present, the value of $kq$ would be 1, and there would be no contrast enhancement. For very large amounts of glare, the value of $k_q$ would tend toward $L_{G,q}$.

It should be noted that the 2nd and 3rd steps above may be performed for all pixels in the input image, or only for selected pixels, as for instance for pixels that are in the input image but are not part of the set *G* of glare inducing pixels, or for instance only for pixels that are sufficiently dark and/or sufficiently far away from any glare sources. Such variants in which contrast enhancement (see 4th step below) is only applied for selected pixels will advantageously reduce the computational cost of the method.

4th step : applying the computed increase of contrast of pixel *q* to the input image:

Different methods are known to enhance locally contrast in an input image. In the current embodiment, a specific method of contrast enhancement named "unsharp masking" is used, but it should be noted that other known contrast enhancement techniques may be used instead.

Unsharp masking is a known technique whereby an input image *I* is convolved with a small blur kernel, leading to a new "smoothed" image $I_{smooth}$ that has undergone smoothing. Through a subtraction between the input image and the smoothed image provides an edge image as follows:

$$I_{edge} = I_{input} - I_{smooth} \qquad eq.(5)$$

An edge fraction m of this edge image may then be added to the input image, leading to the sharpened output image :

$$I_{output} = I_{input} + mI_{edge} \qquad eq.(6)$$

This edge fraction *m* determines how much sharpening is applied, and is currently chosen in the range $m \in [0.2, 0.7]$.

In order to apply the "unsharp masking" method of contrast enhancement, the edge parameter $m_q$ of a pixel *q* of the input image should be computed in function of the computed factor $k_q$ of increase of contrast of the previous step above.

The parameter range of the factor $k_q$ of increase of contrast is $k_q \in [1, I_{G,q}]$ for the pixel *q.* The upper bound is known for each pixel, as described above. At this point it may be beneficial to introduce a user-definable parameter *s* that determines the maximum amount of contrast enhancement. For instance, this parameter may be set to *s* = 0.7.

The edge parameter $m_q$ of a pixel *q* of the input image is then computed as follows :

$$m_q = s \frac{k_q - 1}{L_{G,q} - 1} \qquad eq.\ (7)$$

This results in a value range of $m_q \in [0, s]$.

Note that other ways to compute the edge parameter $m_q$ of a pixel *q* of the input may be used instead :

$$m_q = \min\left(\frac{k_q - 1}{L_{G,q} - 1}, s\right) \qquad eq.\ (8)$$

In this example, the range of values of the edge parameter $m_q$ is reduced by clamping.

The "unsharp masking" method of contrast enhancement is then applied in a manner known per se to the input image, leading to an output image the contrast of which is enhanced to compensate for the loss of contrast perception due to veiling glare on the viewer's retina.

It means that the pixel *q* may be now appropriately sharpened by determining:

$$I_{output,q} = I_{input,q} + m_q I_{edge,q} \qquad eq.(6')$$

At the end of this 4th step, an output image $I_{output}$ is obtained.

When this output image, resulting from the above processing of the input image, is displayed on the display device, perception of details is not degraded by intraocular veiling glare, thanks to the processing of the input image.

Typically, for a LCD display device, a black level of $L$ = 0.05 nits corresponds to $\approx 0.015\ mL$ (mL : milli-Lambert).

6

For such a black level, the value of the Weber constant $k$ is around 0.05, or 5%. This means that a just noticeable difference around this black level can be calculated as $\Delta L = 0.05^2 + 0.05 * L_G$.

Typically, for an OLED display device, a black level of 0.0005 nits is equivalent to $\approx 0.00015$ $mL.$ For such a black level, the value of the Weber constant $k$ is around 0.4, or 40%. This means that a luminance difference of 40% would constitute a just noticeable difference. In the presence of glare, this would be $\Delta L = 0.4 * 0.0005 + 0.4 * L_G = 2 * 10^{-4} + 0.4 * L_G.$ In this case, a small amount of glare has a significant potential to affect the perception of contrast, given that the term $0.4 * L_G$ would have a propensity to dominate the term $2 * 10^{-4}$. It means that the compensation of loss of contrast perception due to intraocular veiling glare would be much more important for OLED display devices than for LCD display devices.

In the case that the detection threshold $\Delta L$ is allowed to increase by a factor of 2 as a result of the presence of intraocular glare, then the amount of acceptable glare may be determined from the equation:

$$\frac{\Delta L}{L} = \frac{2\Delta L}{L + L_G}$$

Under these conditions, for common LCD display devices with a black level of 0.05 nits, the glare should not exceed 0.05 nits. A 1000 nit point source will add at least 0.05 nits over an angle of 40 degrees, which is easily more than the entire display surface.

Likewise, for common OLED display devices, the glare should be no more than around 0.0005 nits under these conditions. A 540 nit point source would add 0.0005 nits of glare over an angle of more than 139 degrees. This indicates that an OLED adhering to the UltraHD Alliance standard would have a more severe glare-related limitation than an LCD display adhering to the UltraHD Alliance standard. This is due to the fact that the specified dynamic range of an OLED display is generally much higher than that for a LCD display.

Note that both LCD displays and OLED displays would anyhow benefit from the image processing method above that enhance contrast in dark regions of an input image, where glare would otherwise drown out any detail.

As a conclusion, the image processing method above allow to enhance pixels in a manner consistent with the occurrence of glare in the human visual system. It improves the visual impact of dark areas of high dynamic range content that is shown on high dynamic range displays. The benefit is particularly significant for OLED displays, albeit that LCD displays will also benefit. As such, with the introduction of high dynamic range television, the display quality of an increasingly large number of displays can actually be improved, by taking into consideration the intraocular veiling glare effect.

Although the illustrative embodiments of the invention have been described herein with reference to the accompanying drawings, it is to be understood that the present invention is not limited to those precise embodiments, and that various changes and modifications may be effected therein by one of ordinary skill in the pertinent art without departing from the invention. All such changes and modifications are intended to be included within the scope of the present invention as set forth in the appended claims. Reference numerals appearing in the claims are by way of illustration only and shall have no limiting effect on the scope of the claims.

**Claims**

1. Method for processing an input image into an output image, comprising :

     - detecting in said input image pixels that induce glare,
     then, for each pixel $q$ of a group of pixels of said input image,
     - computing a level of glare $L_{G,q}$ that is induced by said detected pixels and that overlaps said pixel $q,$
     - computing an increase of contrast to apply to said pixel $q$ based on said computed level of glare $L_{G,q}$,
     - applying said computed increase of contrast to said input image,
     then resulting into said output image.

2. Method for processing an input image according to claim 1, wherein said computing an increase of contrast to apply to said pixel $q$ is performed such as to compensate for a loss of contrast perception induced in human eye by said overlapping level of glare $L_{G,q}$,

3. Method for processing an input image according to claim 1 or 2, wherein said computing of an increase of contrast comprises the computing of a factor $k_q$ of increase of contrast to apply to said pixel $q$ according to :

$$k_q = \frac{L_q + L_{G,q}}{L_q}$$

where $L_q$ is the luminance of said pixel *q* and where $L_{G,q}$ is the computed level of glare $L_{G,q}$ overlapping this pixel *q*.

4. Method for processing an input image according to any one of claims 1 to 3, wherein said glare results from light scattering in human eye.

5. Method for processing an input image according to any one of claims 1 to 4, wherein said detecting is performed by thresholding luminance values of pixels of the input image over a luminance threshold $L_T$.

6. Method for processing an input image according to any one of claims 1 to 5, wherein said group of pixels encompasses all pixels of said input image.

7. Method for processing an input image according to any one of claims 1 to 5, wherein said group of pixels does not include said detected pixels.

8. Method for displaying an input image on a display device, comprising :

   - processing said input image into an output image according to any one of claims 1 to 7,
   - displaying said output image on said display device.

9. Method for displaying an input image according to claim 8 depending on claim 5, wherein said luminance threshold $L_T$ is function of the maximum peak luminance $L_{Max\text{-}Display}$ of the display device.

10. Method for displaying an input image according to any one of claims 8 to 9, wherein said glare results from light scattering in human eye of a viewer viewing images displayed by said display device, wherein said computing of the level of glare $L_{G,q}$ is based on a model of light scattering in human eye.

11. Image processing unit comprising at least one processor configured to implement the method for image processing according to any one of claims 1 to 7.

12. Display device comprising :

   - an image processing unit according to claim 11, and
   - means for displaying image processed by said image processing unit.

13. A computer program product comprising program code instructions to execute the method for processing an input image according to any one of the claims 1 to 7, when this program is executed on a computer.

INPUT IMAGE

Detecting glare-inducing pixels

Computing a level of glare at pixel $q$

Computing an increase of contrast to apply to pixel $q$

Applying increase of contrast

OUTPUT IMAGE

Display Device

Fig.1

Fig. 2

Europäisches
Patentamt

European
Patent Office

Office européen
des brevets

## EUROPEAN SEARCH REPORT

Application Number

EP 17 30 6148

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/104453 A1 (BORENSTEIN NATHANIEL S [US] ET AL) 14 April 2016 (2016-04-14) * abstract * * paragraph [0065]; figure 10 * ----- | 1-13 | INV. G06T5/00 H04N1/407 |
| A | DEVLIN K ET AL: "Dynamic Range Reduction Inspired by Photoreceptor Physiology", IEEE TRANSACTIONS ON VISUALIZATION AND COMPUTER GRAPHICS, IEEE SERVICE CENTER, LOS ALAMITOS, CA, US, vol. 11, no. 1, January 2005 (2005-01), pages 13-24, XP011122132, ISSN: 1077-2626, DOI: 10.1109/TVCG.2005.9 * the whole document * ----- | 1-13 | |

TECHNICAL FIELDS
SEARCHED        (IPC)

G06T
H04N

The present search report has been drawn up for all claims

| Place of search | Date of completion of the search | Examiner |
|---|---|---|
| Munich | 5 March 2018 | Borotschnig, Hermann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 6148

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2018

| Patent document cited in search report | Publication date | Patent family member(s) | Publication date |
|---|---|---|---|
| US 2016104453 A1 | 14-04-2016 | US 2016104453 A1<br>US 2016379593 A1<br>WO 2016060815 A1 | 14-04-2016<br>29-12-2016<br>21-04-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RITSCHEL ; RITSCHEL et al.** *Temporal Glare: Real-Time Dynamic Simulation of the Scattering in the Human Eye,* 2009
- **CHOI.** Minimizing Veiling Glare in the High-Luminance-Range Visualization of Medical Images. *SID 2012 DIGEST,* 816-819

- **BAXTER, B. ; RAVINDRA, H. ; NORMANN, R.A.** Changes in lesion detectability caused by light adaptation in retinal photoreceptors. *Investigative Radiology,* 1982, vol. 17 (4), 394-401